# EUROPÄISCHE PATENTANMELDUNG

(11) **EP 0 660 497 A1**
(43) Veröffentlichungstag der Anmeldung: **28.06.1995**
(21) Anmeldenummer: 94120149.3
(22) Anmeldetag: 19.12.1994
(51) Int. Cl.: H02M 7/08, H01F 27/38

(54) **Verfahren zum Gleichrichten eines Drehstromes und Drehstrom-Gleichrichteranordnung**

(30) Priorität: 21.12.1993 CH 3808/93
(71) Anmelder: Cachin, Roland, CH-8840 Einsiedeln (CH)
(72) Erfinder: Cachin, Roland, CH-8840 Einsiedeln (CH)
(74) Vertreter: Troesch Scheidegger Werner AG

(57) **Zusammenfassung**

Um bei der Gleichrichtung von Drehströmen die ausgangsseitige Welligkeit und insbesondere den Oberwellenanteil der primärseitigen Phasenströme zu reduzieren wird an einem Uebertrager-Drehstromtransformator (Tr) sekundärseitig eine Wicklungskonfiguration sowohl in Sternschaltungs- (λ) wie auch in Dreieckschaltungs-(Δ) Konfiguration betrieben (3). Es werden Dreieckströme I_{Δ} und Sternströme I_{λ} und/oder aus diesen zusammengesetzte Ströme (7) schliesslich gleichgerichtet (9) vorzugsweise zweiweg-gleichgerichtet.

## Beschreibung

Die vorliegende Erfindung betrifft ein Verfahren zum Gleichrichten eines Drehstromes nach dem Oberbegriff von Anspruch 1 sowie eine Drehstrom-Gleichrichteranordnung nach demjenigen von Anspruch 8.

Aus der WO-A-90 00829 ist eine Gleichrichteranordnung mit sekundärseitiger Stern-Gegentaktschaltung bekannt.

Aus IEE Proceedings B, March 1990, UK, Vol. 137, Nr. 2, S. 125-140, ISSN 0143-7038, Hall J.K. et al., "Parallel operation of bridge rectifiers without an interbridge reactor", ist eine Thyristor-gesteuerte Gleichrichtereinheit, bei der die Phasenwinkel von 30° durch eine Kontrolleinheit überwacht werden, bekannt.

Im weiteren wird auf die folgenden Schriften hingewiesen: EPE '89, 3rd European Conference on Power Electronics and Applications, Aachen, West Germany, 9-12 Okt. 1989, 1989, Düsseldorf, West Germany, EPE '89-Secretariat, West Germany, S. 1131-1136, Vol. 3, Niermann C., "New rectifier circuits with low mains pollution and additional low cost inverter for energy recovery"; Electronic Design, Bd. 40, Nr. 21, 15. Oktober 1992, Cleveland, OH, USA, S. 75, J. Dunn, "Wye-Delta Rectifier Reduces Ripple"; US-A-3 217 231 (E.T. Duncan et al.), 9. November 1965; FR-A-1 259 718 (Licentia Patent-Verwaltungs GmbH), 20. März 1961; US-A-2 759 140 (H. Lewis) 14. August 1956; CH-A-385 336 (Maschinenfabrik Oerlikon), 15. März 1965.

Es ist bekannt, einen Drehstrom über einen Drehstromtransformator gleichzurichten, wobei die sekundärseitigen Transformatorwicklungen in Dreieckschaltung (Δ-Schaltung) oder in Sternschaltung (λ-Schaltung) betrieben werden.

Aufgrund der jeweiligen 120° Phasenverschiebungen der λ- bzw. Δ-Ströme ergeben sich auch bei sekundärseitiger Zweiweg-Gleichrichtung relativ grosse Welligkeiten, die durch einen Filterkreis insbesondere einen relativ gross bemessenen Glättungskondensator geglättet werden müssen. Dabei ergibt sich auch primärseitig ein stark pulsierender Strom mit hohem Oberwellenanteil. Der hohe Oberwellenanteil mit entsprechender Verlustleistung bedingt auch eine grössere Transformatordimensionierung als dies für die Uebertragung mindestens genähert sinusförmiger Ströme notwendig wäre.

Es ist Aufgabe der vorliegenden Erfindung diese Nachteile zu beheben. Zu diesem Zweck zeichnet sich das erfindungsgemässe Verfahren nach dem kennzeichnenden Teil von Anspruch 1 aus, die erfindungsgemässe Drehstrom-Gleichrichteranordnung nach demjenigen von Anspruch 8.

Dadurch dass, sekundärseitig, sowohl Δ-Schaltungs- wie auch λ-Schaltungs-Ströme ausgenützt, d.h. gleichgerichtet werden, insbesondere vorzugsweise zweiweg-gleichgerichtet werden, wurden Ströme ausgenützt, die, sequentiell, 30° und 90° Phasenverschiebung aufweisen bei der bevorzugten Zweiweg-Gleichrichtung 30° und 60°.

Trotz bekannter Betragsungleichheit und der vorerst erfindungsgemäss ausgenützten Δ- und λ-Ströme und ergibt sich bereits dadurch eine wesentlich verbesserte sekundärseitige Welligkeit und ein reduzierter Oberwellenanteil der primärseitigen Phasenströme.

Zusätzlich zur sekundärseitigen Ausnützung der Δ- und λ-Ströme werden weiter erfindungsgemäss aus den erwähnten Strömen zusammengesetzte Ströme gebildet, was mit hoher Flexibilität erlaubt, Ströme mit dichter und vorzugsweise gleichmässiger Phasenabfolge zu realisieren, mit optimiert gestalteten Beträgen, vorzugsweise gleichen Beträgen und sie gleichzurichten. Alternativ zur Ausnützung der Δ-Ströme und λ-Ströme als solche, können auch ausschliesslich aus den erwähnten Δ- und λ-Strömen zusammengesetzte Ströme erfindungsgemäss sekundärseitig ausgenützt werden.

Bei einer bevorzugten Ausführungsvariante werden die Amplituden bzw. Beträge der sekundärseitigen gleichzurichtenden Ströme gleich ausgebildet. Dadurch erfolgt eine weitere wesentliche Reduktion der ausgangsseitigen Welligkeit und des Oberwellenanteils der primärseitigen Phasenströme.

Bevorzugte Ausführungsvarianten des erfindungsgemässen Verfahrens sowie der erfindungsgemässen Gleichrichteranordnung sind einerseits in den Ansprüchen 2-7 anderseits 9-14 spezifiziert. Die Erfindung wird anschliessend beispielsweise anhand von Figuren erläutert.

Es zeigen:
- Fig.1: In Form eines Signalfluss/Funktionsblock-Diagrammes, das Grundkonzept der Signalverarbeitung für die Realisation des erfindungsgemässen Verfahrens bzw. der erfindungsgemässen Gleichrichteranordnung.
- Fig.2: In der komplexen Ebene, Lage und Betrag der umlaufenden sekundärseitigen Δ- und λ-Strom-Zeiger sowie erfindungsgemäss daraus abgeleiteter Ströme mit λ-Strom-Betrag.
- Fig.3: In für Δ / λ Betrachtung bekannter Darstellung stillstehender Zeiger, die Verhältnisse gemäss Fig. 2.
- Fig. 4: Ausgehend von der Darstellung von Fig. 2 in der komplexen Ebene, die umlaufenden Strom-Zeiger bei erfindungsgemäss realisierten gleichen Beträgen, zusätzlich zur Erläuterung der erfindungsgemässen Möglichkeit aus Δ- und/oder λ-Strömen sekundärseitig weitere Ströme zu realisieren.
- Fig. 5: Einen erfindungsgemässen, 12-poligen Gleichrichter in bevorzugter Ausführungsvariante.
- Fig. 6: In Analogie zur Darstellung von Fig. 3 die Verhältnisse an der Gleichrichteranordnung gemäss Fig. 5 entsprechend den anhand von Fig. 4 erläuterten Zeigerverhältnissen.
- Fig.7: Die Abfolge des Leitendwerdens der in Fig. 5 vorgesehenen Dioden über der Zeitachse t.
- Fig. 8: Die Darstellung der erfindungsgemässen Gleichrichteranordnung von Fig 5 in der Zeigerdarstellung nach Fig. 6.
- Fig. 9: Ausgehend von der Darstellungsweise gemäss Fig. 8, den Weiterausbau der erfindungsgemässen Gleichrichteranordnung, arbeitend nach dem erfindungsgemässen Verfahren, zu einem 24-poligen Gleichrichter.
- Fig. 10: Ueber der Zeitachse t die zeitliche Abfolge der leitenden Dioden, wie sie in Fig. 9 den einzelnen Stromzweigen zugeordnet sind.
- Fig. 11a: Ueber der Zeitachse den Spannungsverlauf der ungeglätteten Spannung U_{CR} an einer Schaltung gemäss Fig. 5, wobei jedoch sekundärseitig die Wicklungen ausschliesslich in λ-Konfiguration betrieben sind.
- Fig. 11b: Die beim Betrieb gemäss Fig. 11a resultierenden primärseitigen Phasenströme.
- Fig. 12a: In einer Darstellung analog zu Figur 11a die Verhältnnisse bei ausschliesslichem Betrieb der Wicklungen in Δ-Konfiguration.
- Fig. 12b: Die beim Betrieb gemäss Fig. 12b resultieren Strom- und Spannungsverläufe primärseitig.
- Fig. 13a: In analoger Darstellung wie Fig. 11a und 12a den Verlauf der Spannung U_{CR} bei einer erfindungsgemässen Konfiguration gemäss Fig. 5.
- Fig. 13b: Die resultierenden primärseitigen Stromverläufe ohne Ausnützung zusammengesetzter Sekundärströme und
- Fig. 13c: Die primärseitigen Strom- und Spannungsverläufe bei erfindungsgemäss betragsoptimierten Sekundärströmen.

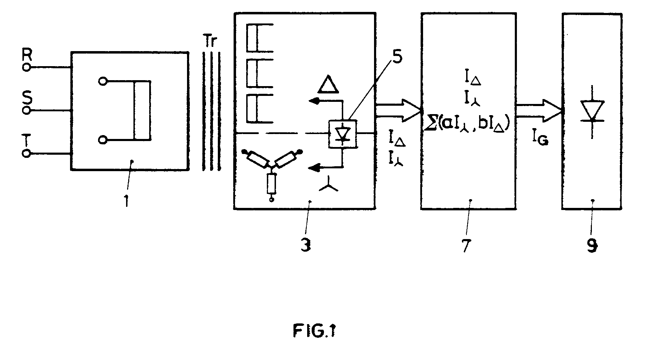

In Fig. 1 ist in Form eines Signalfluss-Funktionsblockdiagrammes das Grundkonzept der Realisation des erfindungsgemässen Verfahrens bzw. der erfindungsgemässen Gleichrichteranordnung dargestellt.

Ein Drehstromsignal mit den Phasen RST wird primärseitig 1 einem transformatorischen Drehstrom-Uebertrager Tr zugespiesen. Sekundärseitig 3 des transformatorischen Drehstrom-Uebertragers Tr ist eine Wicklungskonfiguration vorgesehen, welche gesteuert sowohl in Dreieckschaltung Δ wie auch in Sternschaltung λ betreibbar ist, wobei die intermittierende Δ/λ-Umsteuerung mittels Schaltelementen erfolgt, vorzugsweise mittels passiver Schaltelemente, wie dargestellt, vorzugsweise mittels eines Diodennetzwerkes 5. Die intermittierend gebildeten Δ-Schaltungsströme und λ-Schaltungsströme I_{Δ}, I_{λ} werden, signalflussmässig, an einer Verarbeitungseinheit 7 verarbeitet, derart, dass ausgangsseitig der Einheit 7 gleichzurichtende Ströme I_{G} entstehen, die sich wie folgt zusammensetzen:
- Δ-Ströme und aus λ-Strömen zusammengesetzte Ströme oder
- Δ-Ströme und aus Δ-Strömen und λ-Strömen zusammengesetzte Ströme,
- λ-Ströme und aus Δ-Strömen zusammengesetzte Ströme,
- λ-Ströme und aus λ- und Δ-Strömen zusammengesetzte Ströme,
- λ-Ströme und Δ-Ströme und aus Δ-Strömen zusammengesetzte Ströme,
- Δ-Ströme und λ-Ströme und aus λ-Strömen zusammengesetzte Ströme,
- λ-Ströme und Δ-Ströme und aus Δ- und λ-Strömen zusammengesetzte Ströme.

Die Zusammensetzung der erwähnten zusammengesetzten Ströme erfolgt dabei vektoriell, d.h. phasenrichtig, wobei je nach Bedarf durch Wahl der Komponenten der zusammengesetzten Ströme deren Phasen und Ampiituden bestimmt werden.

Die an der Einheit 7 gebildeten Ströme werden schliesslich an einer Einheit 9 gleichgerichtet.

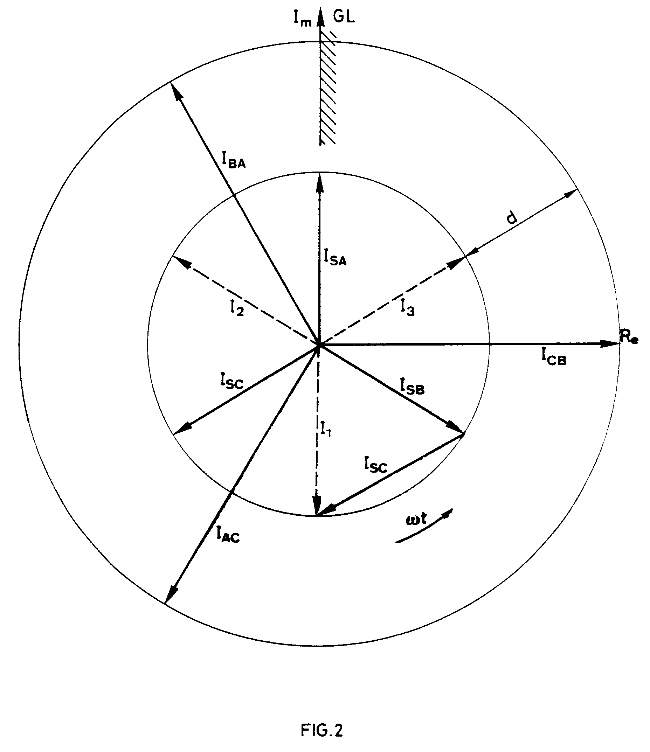

In Fig. 2 sind die Δ-Ströme I_{CB}, I_{BA} und I_{AC} als Zeiger in der komplexen Ebene dargestellt. Diese Ströme werden an der Dreieckschaltung Δ gemäss Fig. 1 gebildet. Im weiteren sind in Fig. 2 die bezüglich eines Sternpunktes S resultierenden λ-Ströme I_{SB}, I_{SA} und I_{SB} dargestellt.

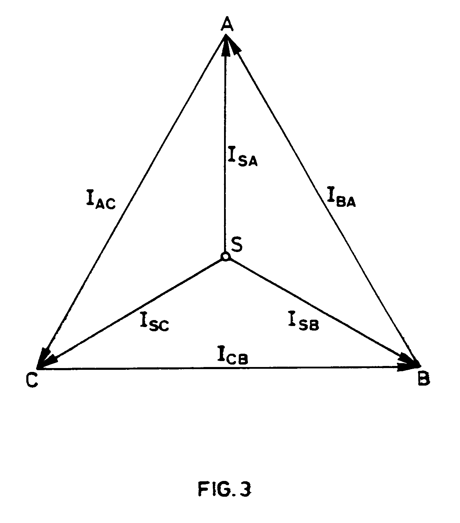

In Fig. 3 ist die für Dreieck/Sternschaltungen übliche Darstellung der phasenrichtigen, amplitudenrichtigen, aber im Gegensatz zu Fig. 2 nicht umlaufenden Zeiger gezeigt.

In Fig. 2 ist der Bereich GL eingetragen, in welchem mit Bezug auf die reelle Achse Re eine Einweg-Gleichrichtung erfolgt. Werden die Δ-Ströme und die λ-Ströme, wie in Fig. 2 dargestellt, weiter unverändert, gleichgerichtet, so ergibt sich bereits jetzt gegenüber der Gleichrichtung allein der Δ-Ströme oder allein der λ-Ströme vor Filterung, sowohl bei Einweg- wie auch bei Zweiweg-Gleichrichtung, eine deutliche Verbesserung der Welligkeit und Verkleinerung des Oberwellenanteils.

Wie aus Fig. 2 ersichtlich, ist jedem Δ-Strom, mit 30° Phasenverschiebung, ein λ-Strom nacheilend zugeordnet. Eine weitere wesentliche Verbesserung der Welligkeit und des Oberwellenanteils des gleichgerichteten Signals, damit wiederum des Oberwellenanteils der primärseitigen Phasenströme, wird erreicht, indem, wie in Fig. 2 gestrichelt eingetragen, weitere, abgeleitete Ströme bezüglich der erwähnten Δ-Ströme 30° voreilend realisiert werden.

Durch Addition des λ-Stromes I_{SB} und des λ-Stromes I_{SA} wird beispielsweise der Summenstrom I₁ realisiert und durch entsprechende vektorielle Addition die Summenströme I₂, I₃. Dabei ist ohne weiteres ersichtlich, dass, durch Wahl der Beträge der zu addierenden Komponenten in den jeweiligen λ-Stromrichtungen, Betrag und Phasenlage der resultierenden Summenströme I₁₋₃ eingestellt werden können, wobei die Beträge der jeweiligen Komponenten durch die Wahl des Wicklungsverhältnisses des jeweils wirksamen Teils des transformatorischen Uebertragers eingestellt werden können.

Ein optimaler Zustand bezüglich der Grössen, Welligkeit, Klirrfaktor und oberwellenanteil der primärseitigen Phasenströme wird dann erreicht, wenn sowohl gleich verteilte Stromphasenlagen vorliegen wie auch gleiche Strombeträge. Hierzu wird bei einer weitaus bevorzugten Ausführungsvariante der vorliegenden Erfindung ausgenützt, dass bei Zweiweg-Gleichrichtung die Beträge in Phasenopposition stehender Teilströme addiert werden.

Gemäss Fig. 2 addiert sich bei Zweiweg-Gleichrichtung beispielsweise der Betrag des Summenstromes I₂ zum Betrag des λ-Stromes I_{SB}.

Die Differenz zwischen den Beträgen von Δ-Strömen und λ-Strömen beträgt (1-1/√3). Dies entspricht der Differenzlänge d von Fig. 2. Wird nun der Summenstrom I₂ betragsmässig gleich d ausgelegt, so ergibt sich, aufgrund der Zweiweg-Gleichrichtung, eine Addition, beispielsweise des λ-Stromes I_{SB} mit dem Summenstrom I₂ des Betrages d und damit ein resultierender Strom Iᵣ bezüglich I_{CB} 30° nacheilend gleicher Länge wie die Δ-Ströme.

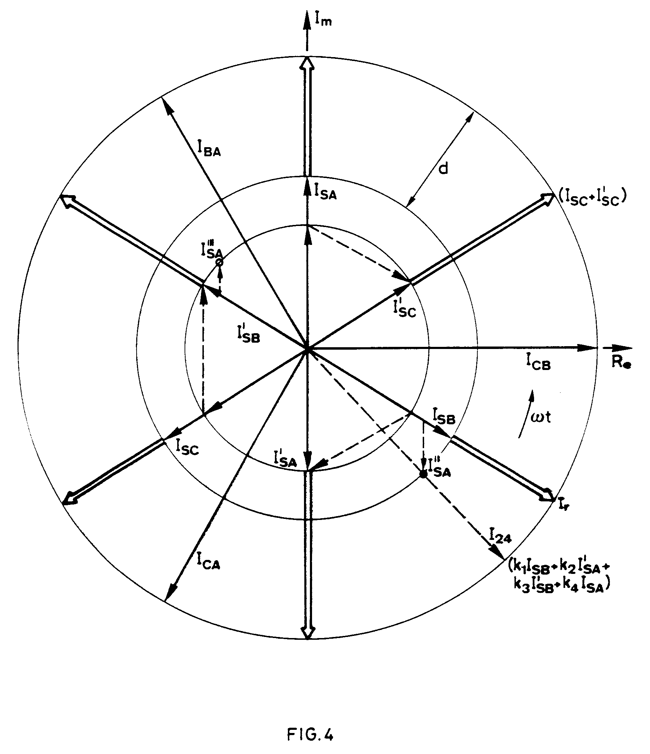

Diese bei einer weitaus bevorzugten Ausführungsvariante der vorliegenden Erfindung realisierten Stromzeigerverhältnisse sind in Fig. 4 dargestellt.

In Fig. 4 sind nämlich, wiederum in der komplexen Ebene, die Δ-Zeiger I_{CB} bis I_{CA} dargestellt sowie die λ-Zeiger I_{SB} bis I_{SA}, im Gegenuhrzeigersinn umlaufend. In Phasenopposition zu den λ-Stromzeigern I_{SB} bis I_{SA} werden Ströme gebildet, deren Zeiger I'_{SB} bis I'_{SA} den Betrag d aufweisen.

Jeder dieser Stromzeiger I'_{SA} bis I'_{SC} wird gebildet durch Addition der mit dem betrachteten Stromzeiger I' nicht in Phasenopposition liegenden λ-Ströme, je mit um den Faktor (1-1/√3) verringertem Betrag, wie durch die teils gestrichelt dargestellte Vektoraddition in Fig. 4 dargestellt.

Aufgrund der Zweiweg-Gleichrichtung erscheinen die Beträge von in Phasenopposition stehenden Stromvektoren, gleichgerichtet, addiert. Somit bewirkt die Zweiweg-Gleichrichtung, dass ein Strom des Betrages (I_{SA} + I'_{SA}) erscheint, mithin gleichen Betrages wie die Δ-Ströme. Mit der Zweiweg-Gleichrichtung ergibt sich, dass sinusförmige Ströme gleicher Amplitude mit 30° Phasenverschiebung, wie die Spiegelung der Zeiger mit negativem Realteil an der Imaginärachse von Fig. 4 erkenntlich macht, als gleichzurichtende Signale erscheinen, womit die Welligkeit des gleichgerichteten Signals drastisch reduziert wird, ebenso der Oberwellenanteil, und womit insbesondere auch die Phasenströme RST primärseitig des transformatorischen Uebertragers Tr gemäss Fig. 1 praktisch sinusförmig bleiben, einen verschwindenden Oberwellenanteil aufweisend, bei einem cos φ-Faktor praktisch von 1.

Vom Netz her betrachtet, erscheint der transformatorische Uebertrager mit nachfolgender Gleichrichtung praktisch als ohmische Last.

Bei der Zweiweg-Gleichrichtung entspricht dieses Vorgehen einer zwölfpoligen Gleichrichtung. Es werden sechs um 30° phasenverschobene Ströme gleicher Amplitude zweiweg-gleichgerichtet.

Wie aus Fig. 4 weiter ersichtlich, kann die Polzahl beliebig erhöht werden durch Realisierung weiterer Stromzeiger, durch vektorielle Stromzeiger-Ueberlagerung. Anhand des Stromzeigers I₂₄ ist dargestellt, wie zwölf 15° phasenverschobene betragsgleiche Stromzeiger realisiert werden können, entsprechend einer 24poligen Zweiweg-Gleichrichtung.

In Fig. 5 ist eine bevorzugte Realisationsform einer erfindungsgemässen zwölfpoligen Gleichrichterschaltung dargestellt. Primärseitig wird sie über die Phasen RST in Sternschaltung betrieben. Die Schaltungskonfiguration ergibt sich ohne weiteres aus der Figur.

Speziell hingewiesen muss aber auf die ausgangsseitige Konfiguration der Induktivität Lₒ und der beiden Kapazitäten C_{R} und C_{L}. C_{R} dient lediglich dem Abfangen der Recovery Vorgänge an den Dioden und ist sehr klein zu bemessen verglichen mit C_{L} welch letzere den eigentlichen Glättungskondensator bildet. Die Induktivität Lₒ erzwingt bei nicht zu grossen betragsmässigen Abweichungen der erwähnt λ- und Δ-Ströme einen Betragsausgleich, womit die Betragsgleichheit der erwähnten Ströme massgeblich gefördert wird. Dadurch bleibt der Klirrfaktor sowohl des Zweiweg-gleichgerichteten Ausgangssignals über dem Glättungs-kondensator C_{L} wie auch und insbesondere der transformator- primärseitigen Ströme auch bei leichten Betragabweichungen der oben angesprochenen λ- und Δ-Ströme, klein.

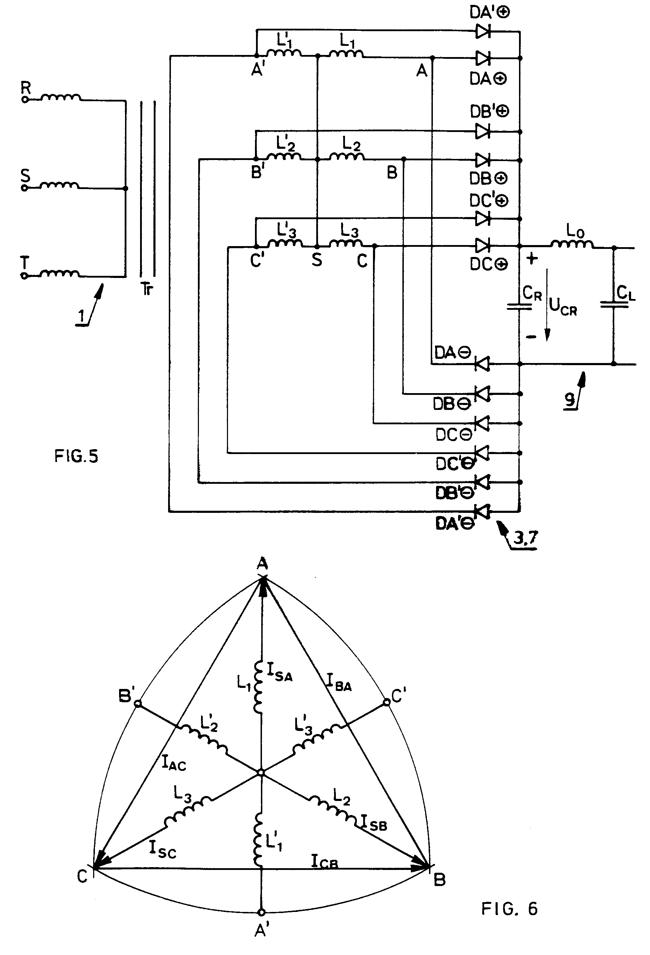

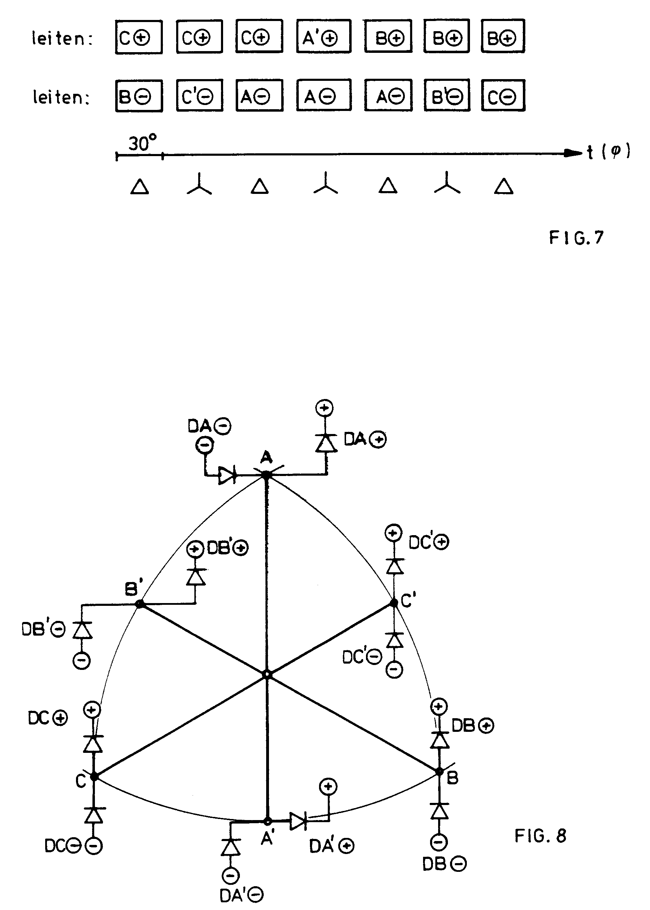

In Fig. 6 ist nochmals die Darstellung gemäss Fig. 3 wiedergegeben, wobei die der Schaltung gemäss Fig. 5 entsprechenden sekundärseitigen Wicklungen des Transformators Tr gemäss Fig. 1 eingetragen sind. Die Zündabfolge der Dioden DX gemäss Fig. 5 soll anschliessend erläutert werden, einerseits mit Hilfe der Darstellung von Fig. 6, anderseits der Darstellung von Fig. 7, worin über der Zeit bzw. Phasenachse die jeweils paarweise leitenden Dioden eingetragen sind.

In Analogie zu den Betrachtungen von Fig. 4 wird die Betrachtung bei Leiten des Δ-Stromes I_{CB} begonnen. Hier leitet gemäss Fig. 7 die Diode C+ und B-: Die Serieschaltung der Wicklungen L₂ und L₃ wird vom Δ-Strom I_{CB} durchflossen.

In Fig. 6, im Gegenuhrzeigersinn fortschreitend, sind anschliessend die Dioden C+ und C'- leitend. Damit werden gemäss Fig. 5 die seriegeschalteten Wicklungen L'₃ und L₃ vom Summenstrom I_{SC} + I'_{SC} (Fig. 4) durchflossen.

Anschliessend werden die Dioden C+ und A- leitend, womit die Spulen L₁, L₃ vom Δ-Strom I_{CA} Stromdurchflossen werden.

Dann wird das Diodenpaar A'+, A- leitend, womit die Serieschaltung der Spulen L'₁, L₁ vom Summenstrom I_{SA}, I'_{SA} gemäss Fig. 4 durchflossen wird.

Darauf wird das Diodenpaar B+, A- leitend, die Spulen L₁, L₂ werden vom Δ-Strom I_{BA} durchflossen.

Dann wird das Diodenpaar B+, B'- leitend, die Spulen L'₂, L₂ werden vom Summenstrom I_{SB}, I'_{SB} (s. Fig. 4) stromdurchflossen.

Schliesslich wird das Diodenpaar B+, C- stromdurchflossen, vom Δ-Strom I_{CB}.

Wie in Fig. 7 unten dargestellt, folgen sich in einem Phasenabstand von 30° Δ-Ströme sowie zusammengesetzte λ-Ströme.

Um auf die Realisation höherpoliger Gleichrichterschaltungen zu kommen, ist in Fig. 8 die Darstellung von Fig. 6 mit den schematisch eingezeichneten +/- -Dioden noch einmal dargestellt. Dabei sind in den entsprechenden Zweigen die vorgesehenen sekundärseitigen Transformatorwicklungen gemäss Fig. 6 weggelassen.

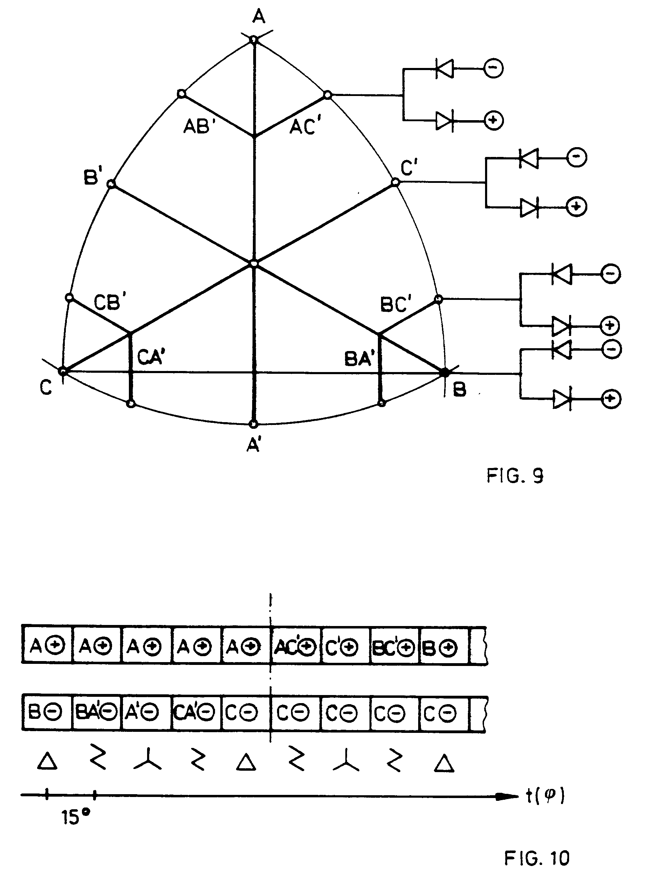

In Fig. 9 ist, ausgehend von der Darstellungsart gemäss Fig. 8 bzw. dessen Analogie zu Fig. 5, der Aufbau eines 24poligen Gleichrichters gemäss vorliegender Erfindung dargestellt. Es sind nur die Dioden +/- der Zweige AC', C', BC', B dargestellt. Die Diodenbezeichnung mit Zweig und Flussrichtung ist damit ohne weiteres verständlich. Jeder Zweig in Fig. 9 stellt, in Analogie zu Fig. 6, eine der sekundärseitigen Transformatorwicklungen dar, mit entsprechendem Wicklungsverhältnis.

Für den 24poligen erfindungsgemässen Gleichrichter gilt die in Fig. 10 dargestellte Abfolge bezüglich leitender Diodenpaare. Es wechseln sich Δ-Ströme, aus λ- und Δ-Strömen zusammengesetzte Ströme (Z) und nur aus λ-Strömen, analog zum 12poligen Gleichrichter, zusammengesetzte Ströme (λ) in der angegebenen Abfolge ab.

Es ist ohne weiteres möglich, den erfindungsgemässen Gleichrichter mit noch höherer Polzahl, beispielsweise 48 Polen, entsprechend einer Stromphasenverschiebung von 7,5° auszubilden, wobei dann das Verhältnis des zu treibenden Aufwandes zum erbrachten Resultat, verglichen mit dem 24poligen Gleichrichter, kaum mehr vertretbar ist. Bereits der 12polige, anhand der Figuren bis und mit 8 erläuterte Gleichrichter ergibt ausserordentlich gute Resultate.

Mit dem erfindungsgemässen Vorgehen kann, als weiterer wesentlicher Vorteil, der Transormator bezüglich der zu übertragenden Leistung wesentlich kleiner dimensioniert werden als bei herkömmlichen Gleichricht-Uebertragungstransfomatoren mit sekundärseitiger Δ- oder λ- Wicklungskonfiguration, weil aufgrund der Oberwellenreduktion wesentlich kleinere Verlustleistungen auftreten.

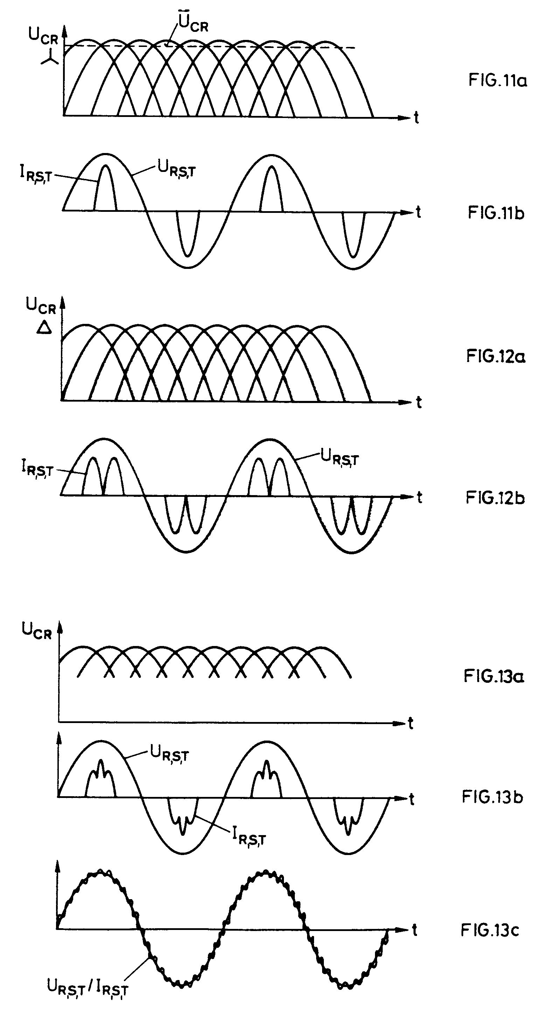

In Fig. 11a ist die Spannnung U_{CR} gemäss Fig. 5 dargestellt bei nicht erfindungsgemässem Vorgehen, indem sekundärseitig die Wicklungen ausschliesslich in λ-Konfiguration betrieben werden, mit Blick auf Fig. 4 entsprechend den Strömen I_{SA}, I_{SC} und I_{SB}. Bezogen auf den Mittelwert der welligen Ausgangsspannung U_{CR},U_{CR} beträgt die Welligkeit ca. 15%.

In Fig. 11b sind die resultierenden, primärseitigen Phasenströme I_{R,S,T} bzw. die Phasenspannungen U_{R,S,T} dargestellt. Aus dieser qualitativen Darstellung ist der hohe Oberwellenanteil insbesondere auch in den primärseitigen Phasenströmen deutlich ersichtlich.

In den Figuren 12a sind, in Analogie zu den Figuren 11 a und 11b die bekannten Verhältnisse dargestellt, wenn in Fig. 5 sekundärseitig die Wicklungen ausschliesslich in Δ Konfiguration betrieben werden. Auch hier wird die Welligkeit von U_{CR} ca. 15 %. Gemäss Fig. 12 werden mit Blick auf Fig. 4 ausschliesslich die Ströme I_{SB}, I_{SA} und I_{SC} zweiweg gleichgerichtet.

In Fig. 13a ist die Spannung U_{CR} dargestellt an der erfindungsgemäss betriebenen Schaltung gemäss Fig. 5. Die Welligkeit reduziert sich auf ca. 4 %. Bezüglich der Phasenströme I_{R,S,T} zeigt Fig. 13b, mit den Phasenspannungen U_{R,S,T} die primärseitigen Verhältnisse, wenn ohne Additionswicklungen L_{1'}, L_{2'} und L_{3'} gemäss Fig. 5 gearbeitet wird, d.h., mit Blick auf Fig. 4, unter Ausnützung der Ströme I_{CB}, I_{BA}, I_{CA} sowie I_{SB}, I_{SA}, I_{SC}. Daraus ist ersichtlich, dass, verglichen mit reinem sekundärseitigen Δ-Wicklungsbetrieb, bereits so der Oberwellenanteil primärseitig nachhaltig verringert wird, wobei die Verläufe gemäss Fig. 13b bei primärseitiger Sternschaltung resultieren.

In Fig. 13c sind die primärseitigen Verhältnisse dargestellt, wenn bei der erfindungsgemässen Schaltung gemäss Fig. 5, zusätzlich, in bevorzugter Art und Weise, die vorgenannten Additionswicklungen eingesetzt werden. Mit Blick auf Fig. 4 entspricht dies der Ausnützung nicht nur der Δ-und λ-Ströme, sondern zusätzlich der zusammgengestzen Ströme Iᵣ bzw. (I_{SC} plus I'_{SC}). Der dargestellte Verlauf resultiert sowohl bei primärseitiger λ-Schaltung wie auch bei primärseitiger Δ-schaltung.

Daraus ist ersichtlich, dass insbesondere primärseitig ein praktisch einer ohmschen Last entsprechender Phasenstrom/Phasenspannungs-Verlauf resultiert.

## Patentansprüche

1. Verfahren zum Gleichrichten eines Drehstromes (RST) mittels einer Drehstrom-Transformatoranordnung (1, 3, 7), dadurch gekennzeichnet, dass man sekundärseitig Dreieck-Δ-Schaltungs- und Stern-λ-Schaltungsströme (I_{AC}, I_{CB}, I_{BA}; I_{SB}, I_{SA}, I_{SC}) und/oder daraus zusammengesetzte Ströme (I₁, I₂, I₃, I_{SA''}, I₂₄) gleichrichtet.

2. Verfahren, vorzugsweise nach mindestens einem der Ansprüche, wie nach Anspruch 1, dadurch gekennzeichnet, dass man die Amplitude der gleichgerichteten Ströme gleich macht.

3. Verfahren, vorzugsweise nach mindestens einem der Ansprüche, wie nach einem der Ansprüche 1 oder 2, dadurch gekennzeichnet, dass man die Ströme zweiweg-gleichrichtet (D+, D-).

4. Verfahren, vorzugsweise nach mindestens einem der Ansprüche, wie nach einem der Ansprüche 1 bis 3, dadurch gekennzeichnet, dass man die Dreieckströme (I_{CB}) und zusammengesetzte Ströme (I_{SC}+I'_{SC}; I₂₄) gleichrichtet.

5. Verfahren, vorzugsweise nach mindestens einem der Ansprüche, wie nach einem der Ansprüche 1 bis 4, dadurch gekennzeichnet, dass man die Dreieckströme für sich und hinzu mindestens aus Sternströmen zusammengesetzte Ströme gleicher Amplitude wie die Dreieckströme gleichrichtet.

6. Verfahren, vorzugsweise nach mindestens einem der Ansprüche, wie nach einem der Ansprüche 1 bis 5, dadurch gekennzeichnet, dass man durch Sternstrom-Zusammensetzung mit den Sternströmen in Phasenopposition stehende Ströme bildet, deren Beträge gleich der Differenz zwischen den Beträgen der Dreieck- und der Sternströme sind, und eine Zweiweg-Gleichrichtung vornimmt.

7. Verfahren, vorzugsweise nach mindestens einem der Ansprüche, wie nach einem der Ansprüche 1 bis 6, dadurch gekennzeichnet, dass man die Dreieckströme für sich sowie aus Sternströmen zusammengesetzte Ströme sowie aus Dreieck- und Sternströmen zusammengesetzte Ströme gleichrichtet, vorzugsweise zweiweg-gleichrichret.

8. Drehstrom-Gleichrichteranordnung mit einem transformatorischen Drehstrom-Uebertrager, dadurch gekennzeichnet, dass sekundärseitig die Uebertragerwicklungen phasengesteuert in Dreieck- und in Sternkonfiguration intermittierend betrieben sind und mit einer Gleichrichterschaltung wirkverbunden sind.

9. Gleichrichteranordnung, vorzugsweise nach mindestens einem der Ansprüche, wie nach Anspruch 8, dadurch gekennzeichnet, dass die Uebertragungswicklungs-Stern/Dreieckumsteuerung mittels passiver Halbleiter-Bauelemente, insbesondere mittels Dioden, insbesondere mittels "fast recovery"-Dioden erfolgt.

10. Gleichrichteranordnung, vorzugsweise nach mindestens einem der Ansprüche, wie nach einem der Ansprüche 8 oder 9, dadurch gekennzeichnet, dass die Uebertragerwicklungen mit einer Zweiweg-Gleichrichteranordnung wirkverbunden sind.

11. Gleichrichteranordnung, vorzugsweise nach mindestens einem der Ansprüche, wie nach einem der Ansprüche 8 bis 10, dadurch gekennzeichnet, dass die Uebertragerwicklungen in Dreieckkonfiguration und, damit intermittierend, in Sternkonfiguration und/oder in Dreieck- und gleichzeitig Sternkonfiguration umgesteuert werden.

12. Gleichrichteranordnung, vorzugsweise nach mindestens einem der Ansprüche, wie nach Anspruch 11, dadurch gekennzeichnet, dass die Uebertragerwicklungen in Dreieckkonfiguration und, damit intermittierend, in Sternkonfiguration umgesteuert werden, wobei jeder Wicklung in Sternkonfiguration eine in Phasenopposition stehende Zusatzwicklung zugeordnet ist und das Wicklungsverhältnis sich zugeordneter, in Sternkonfiguration betriebener Uebertragerwicklungen und Zusatzwicklungen so gewählt ist, dass sich die Summe der Beträge der diese Wicklungen durchfliessenden Ströme gleich dem Betrag der Dreieckströme sind und die Uebertragerwicklungen mit einer Zweiweg-Gleichrichteranordnung wirkverbunden sind.

13. Gleichrichteranordnung, vorzugsweise nach mindestens einem der Ansprüche, wie nach Anspruch 12, dadurch gekennzeichnet, dass zusätzlich, weiter intermittierend, jeweils einer Uebertragerwicklung in Dreieckkonfiguration mindestens eine weitere Wicklung in Stern- und/oder Dreieckkonfiguration zugeordnet ist und sich die durch diese Wicklungen dann fliessenden Ströme vektoriell so addieren, dass weitere, vorzugsweise mit den die Uebertragerwicklungen ausschliesslich in Dreieckkonfiguration durchfliessenden Ströme betragsgleiche, phasengedrehte Ströme entstehen und vorzugsweise die Uebertragerwicklungen mit einer Zweiweg-Gleichrichteranordnung wirkverbunden sind.

14. Gleichrichteranordnung, vorzugsweise nach mindestens einem der Ansprüche, wie nach einem der Ansprüche 8 bis 13, dadurch gekennzeichnet, dass primärseitig der transformatorische Uebertrager in Sternschaltung geschaltet ist und vorzugsweise der Sternpunkt floatend betrieben wird.
